Europäisches Patentamt

European Patent Office

Office européen des brevets

(19)

(11) Numéro de publication : **0 502 764 A2**

(12) # DEMANDE DE BREVET EUROPEEN

(21) Numéro de dépôt : **92400502.8**

(22) Date de dépôt : **27.02.92**

(51) Int. Cl.⁵ : **A01N 25/30, A01N 25/04**

(30) Priorité : **06.03.91 FR 9102878**

(43) Date de publication de la demande :
**09.09.92 Bulletin 92/37**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Fiard, Jean-François**
**14, rue Guillaume Bertrand**
**F-75011 Paris (FR)**

(74) Mandataire : **Seugnet, Jean Louis et al**
**RHONE-POULENC CHIMIE Direction de la**
**Propriété Industrielle 25, Quai Paul Doumer**
**F-92408 Courbevoie Cedex (FR)**

(54) **Emulsions phytosanitaires.**

(57)     La présente invention concerne de nouvelles émulsions aqueuses phytosanitaires.
    Plus précisément, l'invention consiste en une émulsion aqueuse de matière active phytosanitaire à l'état liquide, de point de fusion inférieur ou égal à 60°C, sensiblement insoluble dans l'eau, caractérisée en ce qu'elle comporte au moins des sucroglycérides, ladite matière active à l'état liquide au moins un tensio-actif non-ionique et/ou anionique et de l'eau.

EP 0 502 764 A2

La présente invention concerne de nouvelles émulsions phytosanitaires.

Les matières actives phytosanitaires, telles que les insecticides, les germicides, les herbicides, les fongicides, les acaricides, les nématicides, les molluscicides, les rodenticides, les attractifs, les répulsifs, les associations de plusieurs de ces composés, sont généralement insolubles dans l'eau.

Elles peuvent être mises en oeuvre habituellement sous forme de solutions dans des solvants organiques, ces solutions étant ensuite émulsionnées dans l'eau, lors de leur utilisation.

L'emploi de solvants, tels que les xylènes ou le kérosène, pose d'évidents problèmes de pollution de l'environnement.

Un autre mode de préparation des compositions de matières actives consiste en des dispersions aqueuses fluides appelées couramment "flowable" qui sont diluées lors de leur application.

Ces dispersions aqueuses contiennent un ou plusieurs tensio-actifs.

La prise en compte de plus en plus sérieuse des différents problèmes de pollution de l'environnement, conduit à la recherche de compositions phytosanitaires de moins en moins toxiques.

La présente invention contribue à cette évolution par l'utilisation d'un système tensio-actif constitué au moins en partie de composés non-toxiques, non-irritants et biodégradables.

Le caractère émulsifiant et dispersant des sucroglycérides est connu, pour préparer des systèmes dispersés aqueux de matières grasses.

Les sucroglycérides sont des mélanges de produits, obtenus par transestérification de triglycérides, naturels ou de synthèse, avec le saccharose. Ces mélanges contiennent des monoglycérides, des diglycérides, de faibles quantités de triglycérides non transestérifiés, des monoesters et diesters du saccharose.

Le brevet EP-A-0 091 331, qui décrit un procédé de préparation de sucroglycérides fluides, indique également que lesdits sucroglycérides ont des propriétés tensio-actives, qui peuvent être utilisées notamment pour la préparation d'émulsions d'huiles essentielles ou de lait maigre réengraissé. Aux sucroglycérides peuvent également être associées des lécithines et des huiles fluides.

Le brevet CH 423.442 décrit un procédé de préparation d'émulsions d'huiles ou de corps gras solides dans l'eau, utilisant comme système émulsifiant des sucroglycérides et une lécithine.

La présente invention consiste à utiliser ce pouvoir émulsifiant des sucroglycérides pour l'obtention d'émulsions de matières actives phytosanitaires, ainsi que la capacité des sucroglycérides à modifier la bio-disponibilité des matières actives.

Plus précisément, l'invention consiste en une émulsion aqueuse de matière active phytosanitaire à l'état liquide, de point de fusion inférieur ou égal à 60°C, sensiblement insoluble dans l'eau, caractérisée en ce qu'elle comporte au moins des sucroglycérides, ladite matière active à l'état liquide au moins un tensio-actif non-ionique et/ou anionique et de l'eau.

On entend par matière active phytosanitaire à l'état liquide, soit une matière active liquide à température ordinaire, c'est-à-dire vers 20°C-25°C, soit une matière active dont le point de fusion est inférieur ou égal à 60°C liquide ou fondue, en solution dans un solvant organique.

Par matière active sensiblement insoluble dans l'eau, on entend dans le présent texte une matière active dont la solubilité dans l'eau à 20°C est inférieure à 5 g/litre.

A titre d'exemples de matières actives phytosanitaires, on peut citer :

- l'alachlor
- le bromoxynil octanoate ou heptanoate
- le prochloraz
- la perméthrine
- le chloropyrifos méthyle
- le pholpholane
- le tri-aliate
- le tridiphane
- le diméthachlor
- le chloropropham
- le fenobucarb
- le penconazole
- le proflurain
- la trifluraline
- le métolachlor
- le dicofol
- le phenthoate.

Parmi les solvants des matières actives phytosanitaires pouvant maintenir celles-ci à l'état liquide (solution ou surfusion) après fusion, on peut citer de manière non-limitative les hydrocarbures aromatiques comme le benzène, le toluène, les xylènes ; les coupes pétrolières aromatiques ; les esters d'acide gras comme l'oléate de méthyle ; les phtalates de dialkyle comme le phtalate de di(éthyl-2 hexyle) ; les hydrocarbures halogénés comme le dichlorométhane, le trichlorométhane, le dichloro-1,2 éthane ; les cétones comme la cyclopentanone, la cyclohexanone ou l'isophorone ; les solvants aprotiques polaires comme la N-méthylpyrrolidone, le diméthylformamide ou le diméthylacétamide.

L'émulsion peut être préparée en mélangeant les différents composés qui la constituent.

Cependant, afin de mieux ajuster les propriétés souhaitées, c'est-à-dire notamment la taille des particules en émulsion, il est le plus souvent préférable de préparer, d'une part, une émulsion aqueuse à base de sucroglycérides et, d'autre part, une émulsion aqueuse contenant la matière active phytosanitaire, le solvant éventuel et le ou les tensio-actifs anioniques et/ou non-ioniques.

L'émulsion aqueuse à base de sucroglycérides mise en oeuvre dans la présente invention contient donc au moins de l'eau et des sucroglycérides.

Comme indiqué précédemment, les sucroglycérides proviennent de la transestérification de triglycérides par le saccharose.

Dans le présent texte, le terme "sucroglycérides" sera utilisé au pluriel, afin d'indiquer qu'ils ne sont pas constitués par un seul composé chimique.

Comme triglycérides, on utilise généralement les triglycérides des acides aliphatiques, saturés ou insaturés, ayant au moins 4 atomes de carbone. De préférence les acides dont dérivent les triglycérides ont 10 à 20 atomes de carbone.

La préparation des sucroglycérides peut se faire à partir de triglycérides de synthèse, obtenus par réaction du glycérol et d'acides gras. Cependant, il est plus intéressant au plan économique de faire appel aux triglycérides naturels. Ces triglycérides naturels sont des mélanges de triglycérides.

Comme exemples de tels triglycérides naturels, on peut citer le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

Dans la présente invention, les sucroglycérides utilisés proviennent de l'huile de palme, du saindoux, de l'huile de coprah, du suif, de l'huile de colza, l'huile de ricin.

Ils se présentent, soit sous forme liquide comme les sucroglycérides de l'huile de colza ou de l'huile de ricin, soit sous forme de pâtes plus ou moins consistantes, se différenciant notamment par leur point de fusion :

– sucroglycérides de saindoux : 47 à 50°C,
– sucroglycérides de suif : 50 à 55°C,
– sucroglycérides d'huile de palme : 55 à 58°C
– sucroglycérides d'huile de coprah : 60 à 62°C.

Un mode opératoire de préparation des sucroglycérides est décrit dans le brevet FR-A-2 463 512.

On peut utiliser plusieurs sucroglycérides différents dans l'émulsion aqueuse, afin notamment de mettre en oeuvre leurs propriétés spécifiques différentes.

L'émulsion aqueuse de sucroglycérides entrant dans la composition de la suspo-émulsion peut également comporter un phospholipide, en association avec les sucroglycérides.

Parmi les phospholipides utilisés avec les sucroglycérides dans le cadre de l'invention, on peut citer les lécithines brutes d'origine végétale ou animale, telles que la lécithine de soja, la lécithine du jaune d'oeuf ainsi que toute fraction de lécithine.

Cette émulsion de sucroglycérides peut également comprendre d'autres composés tels que les triglycérides alcoxylés, les acides gras alcoxylés, les esters de sorbitan et les esters de sorbitan alcoxylés, qui sont plus particulièrement choisis parmi les triglycérides éthoxylés, les acides gras éthoxylés, les esters de sorbitan et les esters de sorbitan éthoxylés.

Les triglycérides éthoxylés peuvent être des triglycérides d'origine végétale ou animale (tels que le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco) éthoxylés.

Les acides gras éthoxylés sont des esters d'acides gras (tels que par exemple l'acide oléique, l'acide stéarique) éthoxylés.

Les esters de sorbitan sont des esters du sorbitol cyclisé d'acides gras de $C_{10}$ à $C_{20}$ comme l'acide laurique, l'acide stéarique ou l'acide oléique. Ces esters de sorbitan peuvent également être éthoxylés.

Le terme triglycéride éthoxylé vise dans la présente invention, aussi bien les produits obtenus par éthoxylation d'un triglycéride par l'oxyde d'éthylène que ceux obtenus par transestérification d'un triglycéride par un polyéthylène-glycol.

De même le terme acide gras éthoxylé inclut aussi bien les produits obtenus par éthoxylation d'un acide gras par l'oxyde d'éthylène que ceux obtenus par estérification d'un acide gras par un polyéthylène-glycol.

L'émulsion aqueuse à base de sucroglycérides, entrant dans la composition des émulsions de l'invention, comporte généralement, en poids par rapport au volume total de l'émulsion à base de sucroglycérides :
– de 0,1 % à 60 % de sucroglycérides,
– de 0 % à 50 % de phospholipide,
– de 0 % à 20 % de triglycéride alcoxylé et/ou d'acide gras alcoxylé et/ou d'ester de sorbitan et/ou d'ester de sorbitan alcoxylé,
– et le complément à 100 % d'eau.

De préférence, la composition en poids par volume de l'émulsion aqueuse à base de sucroglycérides est la suivante :
– de 3 % à 50 % de sucroglycérides,
– de 0 % à 40 % de phospholipide,
– de 0 % à 15 % de triglycéride alcoxylé et/ou d'acide gras alcoxylé et/ou d'ester de sorbitan et/ou d'ester de sorbitan alcoxylé,
– et le complément à 100 % d'eau.

Les émulsions aqueuses à base de sucroglycérides, utilisées pour préparer les émulsions phytosanitaires de l'invention présentent une très bonne stabilité physico-chimique et une bonne compatibilité avec un grand nombre de suspensions de matières actives.

L'émulsion aqueuse à base de sucroglycérides peut être réalisée par simple mélangeage des différents constituants, en utilisant toutes les techniques connues.

De préférence, afin d'obtenir des dimensions de particules de l'ordre de quelques micromètres, on effectuera la micronisation de l'émulsion à l'aide d'un moulin colloïdal ou d'une turbine à grande vitesse.

L'émulsion aqueuse de matière active phytosanitaire comporte au moins un tensio-actif non-ionique et/ou un tensio-actif anionique .

Le tensio-actif non-ionique, qui peut être utilisé pour préparer l'émulsion de matière active, peut être choisi notamment parmi :
– les di(phényl-1 éthyl) phénols alcoxylés,
– les tri(phényl-1 éthyl) phénols alcoxylés,
– les alkylphénols alcoxylés,
– les amines grasses alcoxylées,
– les alcools gras alcoxylés,
– les huiles de ricin alcoxylées,
– les polymères séquencés oxyde d'éthylène-oxyde de propylène (OE-OP) ou oxyde d'éthylène-oxyde de propylène-oxyde d'éthylène (OE-OP-OE).

Les motifs alcoxyles de ces tensio-actifs sont des motifs oxyéthylène et/ou oxypropylène.

Leur nombre varie habituellement de 2 à 100 selon le HLB (balance hydrophilie/lipophilie) souhaité.

De préférence le nombre de motifs alcoxyles se situe entre 4 et 50.

Les alkylphénols alcoxylés ont généralement 1 ou 2 groupes alkyles, linéaires ou ramifiés, ayant 4 à 12 atomes de carbone, notamment octyles, nonyles ou dodécyles.

Les amines grasses alcoxylées ont généralement de 10 à 22 atomes de carbone.

Les alcools gras alcoxylés ont généralement de 6 à 22 atomes de carbone.

A titre d'exemples de tensio-actifs non-ioniques, on peut citer :
– le di(phényl-1 éthyl)phénol éthoxylé avec 15 motifs oxyde d'éthylène (OE),
– le di(phényl-1 éthyl)phénol éthoxylé avec 5 motifs OE,
– le di(phényl-1 éthyl)phénol éthoxylé avec 10 motifs OE,
– le tri(phényl-1 éthyl)phénol éthoxylé avec 16 motifs OE,
– le tri(phényl-1 éthyl)phénol éthoxylé avec 20 motifs OE,
– le tri(phényl-1 éthyl)phénol éthoxylé avec 25 motifs OE,
– le tri(phényl-1 éthyl)phénol éthoxylé avec 40 motifs OE,
– les tri(phényl-1 éthyl)phénols éthoxy-propoxylés avec 25 motifs OE + OP,
– les nonylphénols éthoxy-propoxylés avec 25 motifs OE + OP,
– les nonylphénols éthoxy-propoxylés avec 30 motifs OE + OP,
– les nonylphénols éthoxy-propoxylés avec 40 motifs OE + OP,
– les nonylphénols éthoxy-propoxylés avec 55 motifs OE + OP,
– les nonylphénols éthoxy-propoxylés avec 80 motifs OE + OP,
– les polymères triséquencés OE-OP-OE.

L'émulsion aqueuse de matière active phytosanitaire peut contenir comme agent tensio-actif non-ionique, les sucroglycérides définis précédemment pour les émulsions aqueuses à base de sucroglycérides.

Il peut être avantageux dans certains cas d'associer aux sucroglycérides un phospholipide, tel que défini précédemment, sans que la présence de ce composé constitue un élément critique de l'émulsion aqueuse de matière active. Le rapport pondéral phospholipide/sucroglycérides est généralement de 0 à 3.

Lorsque l'on utilise des sucroglycérides comme tensio-actif dans les émulsions aqueuses de matière active, celles-ci comportent également de préférence au moins un triglycéride alcoxylé et/ou un acide gras alcoxylé et/ou un ester de sorbitan et/ou un ester de sorbitan alcoxylé. Ce sont plus particulièrement les triglycérides éthoxylés, les acides gras éthoxylés, les esters de sorbitan et les esters de sorbitan éthoxylés qui ont été décrits précédemment.

Le tensio-actif anionique, qui peut être utilisé pour préparer l'émulsion de matière active, est choisi notamment parmi :

– les esters phosphoriques des alkylphénols alcoxylés, des di(phényl-1 éthyl)phénols alcoxylés, des tri(phényl-1 éthyl)phénols alcoxylés, des alcools gras alcoxylés ;
– les esters sulfuriques des alkylphénols alcoxylés, des di(phényl-1 éthyl)phénols alcoxylés, des tri(phényl-1 éthyl)phénols alcoxylés, des alcools gras alcoxylés ;
– les esters sulfoniques des alkylphénols alcoxylés.

Les motifs alcoxyles de ces tensio-actifs anioniques sont des motifs oxyéthylène et/ou oxypropylène.

Leur nombre varie habituellement de 2 à 100 selon le HLB (balance hydrophilie/lipophilie) souhaité.

De préférence le nombre de motifs alcoxyles se situe entre 4 et 50.

A titre d'exemples de tensio-actifs anioniques, on peut citer notamment :

– les sels de triéthanolamine des mono- et diester phosphoriques du tri(phényl-1 éthyl)phénol éthoxylé avec 16 motifs OE,
– les sels de potassium des mono- et diester phosphoriques du tri(phényl-1 éthyl)phénol éthoxylé avec 16 motifs OE,
– le sulfate acide du di(phényl-1 éthyl)phénol éthoxylé avec 11 motifs OE,
– le sel de potassium du monoester sulfurique du di(phényl-1 éthyl)phénol éthoxylé avec 15 motifs OE,
– le sel de triéthanolamine du monoester sulfurique du di(phényl-1 éthyl)phénol éthoxylé avec 11 motifs OE,
– le sel d'ammonium du monoester sulfurique du tri(phényl-1 éthyl)phénol éthoxylé avec 16 motifs OE,
– le phosphate acide de nonylphénol éthoxylé avec 9 motifs OE,
– le dodécylbenzène-sulfonate de sodium,
– le dodécylbenzène-sulfonate de calcium,
– le dodécylbenzène-sulfonate de triéthanolammonium,
– le nonylbenzène-sulfonate de triéthanolammonium,
– le nonylbenzène-sulfonate de diéthanolammonium,
– le dodécylbenzène-sulfonate de N-méthylcyclohexylammonium.

On peut bien évidemment utiliser des mélanges de tensio-actifs non-ioniques et/ou de tensio-actifs anioniques.

L'émulsion aqueuse de matière active, outre le ou les tensio-actifs, la matière active phytosanitaire, le solvant éventuel et l'eau, peut contenir différents autres constituants tels que :

– un antigel,
– un antimousse tel que les organopolysiloxanes par exemple,
– un agent mouillant,
– un agent épaississant,
– et des additifs auxiliaires.

Parmi les agents mouillants pouvant éventuellement être présents, on peut citer le laurylsulfate de sodium et les sulfonates alcalins tels que les alkylsulfonates du type diéthylhexylsulfosuccinate de sodium.

Des antigels conventionnels, tels que l'éthylène-glycol, le propylène-glycol, le glycérol, le diéthylène-glycol, le triéthylèneglycol, le tétraéthylène-glycol, l'urée, peuvent être utilisés.

Des agents épaississants organiques hydrosolubles ou susceptibles de gonfler dans l'eau, tels que les polysaccharides du type gomme xanthane, les alginates, les méthylcelluloses carboxylées ou hydroxylées, les macromolécules synthétiques du type polyacrylates, polymaléates, polyvinylpyrrolidones, polyéthylène-glycols, alcools polyvinyliques, ou inorganiques tels que les bentonites, les silices, peuvent être utilisés.

Les additifs auxiliaires pouvant être présents sont des agents protecteurs vis-à-vis de l'oxydation, des rayons UV ou des variations de pH, des colorants, des bactéricides.

Les proportions (exprimées en poids par volume total d'émulsion) des différents constituants des émulsions aqueuses de matière active phytosanitaire sont généralement les suivantes :

– de 0,1 % à 70 % et de préférence de 0,5 % à 60 % de matière active phytosanitaire ou de solution de matière active phytosanitaire dans un solvant organique,
– de 1 % à 20 % de tensio-actif non-ionique et/ou anionique et de préférence de 2 % à 15 %,

– de 0 à 10 % d'agent mouillant,

– de 0 à 5 % d'épaississant,

– et le complément d'eau.

Dans les proportions indiquées ci-dessus, lorsque le tensio-actif non-ionique est constitué par des sucroglycérides la quantité globale de tensio-actif comprend à la fois lesdits sucroglycérides et le phospholipide, les triglycérides alcoxylés et/ou les acides gras alcoxylés et/ou les esters de sorbitan et/ou les esters de sorbitan alcoxylés qui leur sont éventuellement associés.

Les émulsions aqueuses de matière active phytosanitaire peuvent être préparées par exemple :

– addition du tensio-actif non-ionique et/ou anionique dans la matière active à l'état liquide,

– introduction de l'eau par fraction ou en continu dans la phase organique dispersée ainsi obtenue, à l'aide d'un système d'agitation énergique, les quantités relatives des différents composants correspondant à celles données ci-dessus.

Tout système d'agitation énergique (à haut cisaillement) peut être mis en oeuvre, moulin à colloïdes, pompes à haute pression, agitateur à vibrations, appareil à ultra-sons, passage à travers des filières.

A partir de ces émulsions aqueuses de matière active et des émulsions aqueuses à base de sucroglycérides, on prépare par simple mélangeage les émulsions aqueuses de l'invention.

Les proportions des 2 types d'émulsions sont telles que l'émulsion globale contient par rapport à son volume total :

– de 0,1 à 60 % en poids de matière active,

– de 0,1 à 40 % en poids de sucroglycérides,

– de 0,1 à 15 % en poids de tensio-actif anionique et/ou non-ionique autre que les sucroglycérides,

– de 0 à 30 % en poids de phospholipide,

– de 0 à 15 % en poids de triglycéride alcoxylé et/ou d'acide gras alcoxylé et/ou d'ester de sorbitan et/ou d'ester de sorbitan alcoxylé,

– de 0 à 5 % d'agent mouillant,

– et de l'eau.

Les émulsions aqueuses de l'invention sont stables dans un domaine de température de l'ordre de - 5 à 45° C ; aucun phénomène de recristallisation, de sédimentation ou de coalescence au stockage n'a été constaté.

Elles sont particulièrement intéressantes en formulation phytosanitaire, car elles sont parfaitement compatibles avec les suspensions aqueuses concentrées (flowable) de matières phytosanitaires et peuvent ainsi former des suspo-émulsions stables.

Elles sont utilisées telles quelles ou après dilution par l'eau pour le traitement et la protection des plantes.

Elles sont en outre bien placées sur le plan écotoxilogique, puisque la quantité de solvant qu'elles renferment est relativement faible.

Les exemples suivants illustrent l'invention.


EXEMPLE 1

Emulsion de sucroglycérides d'huile de ricin.

On chauffe à 60°C 200 cm³ d'eau déminéralisée. On porte également à 60°C le sucroglycéride d'huile de ricin nécessaire à la réalisation de l'émulsion, afin de le rendre liquide et suffisamment fluide pour être coulé.

L'émulsion est réalisée à l'aide d'un homogénéiseur de laboratoire.

40 g de sucroglycérides d'huile de ricin sont coulés lentement (5 min environ), dans l'eau déminéralisée, sous agitation (turbine tournant à 2000 tr/min). En fin d'addition, la vitesse de la turbine est portée à 8000 tr/min pendant 3 min.

L'émulsion ainsi obtenue est refroidie à température ambiante, sous une agitation lente.

Elle présente les caractéristiques suivantes :

```
- diamètre moyen des particules : 1,6 µm
- pH                             : 7,7
```

L'émulsion est stable pendant plus de 2 mois à 45°C.

EXEMPLE 2

Emulsion de sucroglycérides d'huile de beurre.

On répète l'exemple 1 en remplaçant le sucroglycéride d'huile de ricin par 32 g de sucroglycéride d'huile de beurre.

L'émulsion obtenue présente les caractéristiques suivantes :

```
- diamètre moyen des particules : 2,2 µm
- pH                            : 6,9
```

L'émulsion est stable pendant plus de 2 mois à 45°C.

EXEMPLE 3

Emulsion de sucroglycérides d'huile de coprah.

On répète l'exemple 1 en remplaçant le sucroglycéride d'huile de ricin par 26 g de sucroglycéride d'huile de coprah.

L'émulsion obtenue présente les caractéristiques suivantes :

```
- diamètre moyen des particules : 0,6 µm
- pH                            : 6,9
```

L'émulsion est stable pendant plus de 2 mois à 45°C.

EXEMPLE 4

Emulsion de sucroglycérides d'huile de ricin.

On répète l'exemple 1 en utilisant 70 g de sucroglycéride d'huile de ricin.
L'émulsion obtenue présente les caractéristiques suivantes :

```
- diamètre moyen des particules : 1,5 µm
- pH                            : 7,8
```

L'émulsion est stable pendant plus de 2 mois à 45°C.
Dans les exemples 5 à 7 qui suivent, les quantités des différents constituants de l'émulsion sont données en grammes pour l'obtention de 1000 cm$^3$ d'émulsion.

EXEMPLE 5

Emulsion aqueuse de Prochloraz.

Le Prochloraz est un fongicide ayant un point de fusion de 40°C et une solubilité dans l'eau à 25°C de 0,048 g/l.
Après l'avoir fondu, on dissout 300 g de Prochloraz dans 167 g d'une coupe pétrolière aromatique (SOLVESSO 200). On rajoute à cette solution :
– 25 g de nonylphénol éthoxypropoxylé ayant une masse moléculaire moyenne de 3000,
– 25 g de phosphate de nonylphénol éthoxylé ayant 6 motifs OE,
– 60 g de monopropylèneglycol,
– 2 g d'antimousse (polydiorganosiloxane).
L'émulsion aqueuse est réalisée à l'aide d'un homogénéiseur de laboratoire, en ajoutant lentement (5 min environ) 275 g d'eau à la solution de Prochloraz préparée précédemment.
En fin d'addition, la vitesse d'agitation est portée à 8000 tours/min pendant 2 min.

On ajoute ensuite 40 g d'une solution aqueuse à 2 % en poids de gomme xanthane, sous agitation lente classique.

L'émulsion aqueuse de matière active ainsi obtenue présente les caractéristiques suivantes :

```
- diamètre moyen des particules : 0,8 µm
- pH                            : 7,0
```

L'émulsion est stable pendant :
– plus de 2 mois à 45°C
– plus de 2 mois en cycles de température : - 5°C, + 45°C.

## EXEMPLE 6

Emulsion aqueuse d'Acétochlor.

L'Acétochlor est un herbicide liquide ayant une solubilité dans l'eau à 25°C de 0,223 g/l.

En suivant le mode opératoire décrit pour l'exemple 5 (mais sans dissoudre la matière active dans un solvant), on prépare une émulsion aqueuse d'Acétochlor ayant la composition suivante :

```
- Acétochlor                           : 560 g
- alcool gras éthoxypropoxylé          : 5 g
- nonylphénol éthoxypropoxylé de masse
  moléculaire moyenne de 2000          : 45 g
- monopropylène-glycol                 : 50 g
- antimousse (polydiorganosiloxane)    : 2 g
- gomme xanthane (à 2 % dans l'eau)    : 40 g
- eau (tamponnée à pH 7)               : 340 g
```

L'émulsion aqueuse de matière active ainsi obtenue présente les caractéristiques suivantes :

```
- diamètre moyen des particules : 0,8 µm
- pH                            : 6,9
```

L'émulsion est stable pendant :
– plus de 2 mois à 45°C
– plus de 2 mois en cycles de température : - 5°C, + 45°C

## EXEMPLE 7

Emulsion aqueuse de Fenobucarb.

Le Fenobucarb est un insecticide ayant un point de fusion de 31-32°C et une solubilité dans l'eau à 30°C de 0,610 g/l.

En suivant le mode opératoire décrit pour l'exemple 5, on prépare une émulsion aqueuse de Fenobucarb ayant la composition suivante :

```
- Fenobucarb                                    : 500 g
- coupe pétrolière aromatique (SOLVESSO 200)    : 90 g
- phosphate de tri(phényl-1 éthyl)phénol
  éthoxylé ayant 16 motifs OE                   : 40 g
- antimousse (polydiorganosiloxane)            : 2 g
- gomme xanthane (à 2 % dans l'eau)            : 50 g
- eau                                           : 330 g
```

L'émulsion aqueuse de matière active ainsi obtenue présente les caractéristiques suivantes :

```
- diamètre moyen des particules : 1,2 µm
- pH                            : 7,5
```

L'émulsion est stable pendant :
– plus de 2 mois à 45°C
– plus de 2 mois en cycles de température : - 5°C, + 45°C .

<u>EXEMPLES 8 à 28</u>

Préparation d'émulsions à partir des émulsions aqueuses de sucroglycérides et des émulsions aqueuses de matière active des exemples précédents.

A partir respectivement d'une émulsion aqueuse de sucroglycérides et d'une émulsion aqueuse de matière active, obtenues dans les exemples précédents, on prépare par simple mélangeage différentes émulsions.
Les poids relatifs des 2 types d'émulsion sont indiqués dans le tableau 1 ci-après.
Chaque émulsion ainsi obtenue a été stable :
– plus de 2 mois à 45°C et
– plus de 2 mois en cycles de température :
   . 24 herues à + 45°C,
   . 24 heures à - 5°C.

| EMULSION | EMULSION SUCROGLYCERIDES | EMULSION MATIERE ACTIVE |
|---|---|---|
| Exemple 8 | 25 g de l'exemple 1 | 50 g de l'exemple 5 |
| Exemple 9 | 50 g de l'exemple 1 | 50 g de l'exemple 5 |
| Exemple 10 | 25 g de l'exemple 1 | 75 g de l'exemple 6 |
| Exemple 11 | 25 g de l'exemple 1 | 25 g de l'exemple 6 |
| Exemple 12 | 25 g de l'exemple 1 | 100 g de l'exemple 7 |
| Exemple 13 | 25 g de l'exemple 1 | 25 g de l'exemple 7 |
| Exemple 14 | 25 g de l'exemple 2 | 50 g de l'exemple 5 |
| Exemple 15 | 25 g de l'exemple 2 | 25 g de l'exemple 5 |
| Exemple 16 | 25 g de l'exemple 2 | 75 g de l'exemple 6 |
| Exemple 17 | 25 g de l'exemple 2 | 25 g de l'exemple 6 |
| Exemple 18 | 25 g de l'exemple 2 | 100 g de l'exemple 7 |
| Exemple 19 | 25 g de l'exemple 2 | 25 g de l'exemple 7 |
| Exemple 20 | 25 g de l'exemple 3 | 25 g de l'exemple 5 |
| Exemple 21 | 50 g de l'exemple 3 | 25 g de l'exemple 6 |
| Exemple 22 | 25 g de l'exemple 3 | 25 g de l'exemple 6 |
| Exemple 23 | 25 g de l'exemple 3 | 25 g de l'exemple 7 |
| Exemple 24 | 25 g de l'exemple 4 | 75 g de l'exemple 5 |
| Exemple 25 | 25 g de l'exemple 4 | 150 g de l'exemple 6 |
| Exemple 26 | 25 g de l'exemple 4 | 50 g de l'exemple 6 |
| Exemple 27 | 25 g de l'exemple 4 | 100 g de l'exemple 7 |
| Exemple 28 | 25 g de l'exemple 4 | 75 g de l'exemple 7 |

<u>Tableau 1</u>

**Revendications**

1. Emulsion aqueuse de matière active phytosanitaire à l'état liquide, de point de fusion inférieur ou égal à 60°C, sensiblement insoluble dans l'eau, caractérisée en ce qu'elle comporte au moins des sucroglycérides, ladite matière active à l'état liquide au moins un tensio-actif non-ionique et/ou anionique et de l'eau.

EP 0 502 764 A2

2. Emulsion selon la revendication 1, caractérisée en ce que la matière active phytosanitaire à l'état liquide est, soit une matière active liquide à température ordinaire, soit une matière active dont le point de fusion est inférieur ou égal à 60°C, liquide ou fondue, en solution dans un solvant organique.

3. Emulsion selon l'une des revendications 1 ou 2, caractérisée en ce que la matière active phytosanitaire est choisie parmi :
   – l'alachlor
   – le bromoxynil octanoate ou heptanoate
   – le prochloraz
   – la perméthrine
   – le chloropyrifos méthyle
   – le phospholane
   – le tri-allate
   – le tridiphane
   – le diméthachlor
   – le chloropropham
   – le fenobucarb
   – le penconazole
   – le proflurain
   – la trifluraline
   – le métolachlor
   – le dicofol
   – le phenthoate.

4. Emulsion selon l'une des revendications 1 à 3, caractérisée en ce que l'on utilise un solvant pouvant maintenir la matière active à l'état liquide après fusion, choisi parmi les hydrocarbures aromatiques comme le benzène, le toluène, les xylènes ; les coupes pétrolières aromatiques ; les esters d'acide gras comme l'oléate de méthyle ; les phtalates de dialkyle comme le phtalate de di(éthyl-2 hexyle) ; les hydrocarbures halogénés comme le dichlorométhane, le trichlorométhane, le dichloro-1,2 éthane ; les cétones comme la cyclopentanone, la cyclohexanone ou l'isophorone ; les solvants aprotiques polaires comme la N-méthylpyrrolidone, le diméthylformamide ou le diméthylacétamide.

5. Emulsion selon l'une des revendications 1 à 4, caractérisée en ce qu'elle est préparée à partir d'une part, d'une émulsion aqueuse à base de sucroglycérides et, d'autre part, d'une émulsion aqueuse contenant la matière active phytosanitaire, le solvant éventuel et le ou les tensio-actifs anioniques et/ou non-ioniques.

6. Emulsion selon l'une des revendications 1 à 5, caractérisée en ce que les sucroglycérides proviennent de la transestérification de triglycérides, de préférence naturels, par le saccharose.

7. Emulsion selon la revendication 6, caractérisée en ce que les triglycérides naturels sont choisis parmi le saindoux, le suif, l'huile d'arachide, l'huile de beurre, l'huile de graine de coton, l'huile de lin, l'huile d'olive, l'huile de palme, l'huile de pépins de raisin, l'huile de poisson, l'huile de soja, l'huile de ricin, l'huile de colza, l'huile de coprah, l'huile de noix de coco.

8. Emulsion selon l'une des revendications 5 à 7, caractérisée en ce que l'émulsion aqueuse à base de sucroglycérides contient un phospholipide, choisi parmi les lécithines brutes d'origine végétale ou animale, telles que la lécithine de soja, la lécithine du jaune d'oeuf ainsi que toute fraction de lécithine.

9. Emulsion selon l'une des revendications 5 à 8, caractérisée en ce que l'émulsion aqueuse à base de sucroglycérides comporte, en poids par rapport au volume de l'émulsion aqueuse à base de sucroglycérides :
   – de 0,1 % à 60 % de sucroglycérides,
   – de 0 % à 50 % de phospholipide,
   – de 0 % à 20 % de triglycéride alcoxylé et/ou d'acide gras alcoxylé et/ou d'ester de sorbitan et/ou d'ester de sorbitan alcoxylé,
   – et le complément à 100 % d'eau,
   et de préférence :
   – de 3 % à 50 % de sucroglycérides,
   – de 0 % à 40 % de phospholipide,
   – de 0 % à 15 % de triglycéride alcoxylé et/ou d'acide gras alcoxylé et/ou d'ester de sorbitan et/ou

11

d'ester de sorbitan alcoxylé,
– et le complément à 100 % d'eau.

10. Emulsion selon l'une des revendications 5 à 9, caractérisée en ce que l'émulsion aqueuse à base de sucroglycérides comporte des triglycérides alcoxylés et/ou des acides gras alcoxylés et/ou des esters de sorbitan et/ou des esters de sorbitan alcoxylés, plus particulièrement choisis parmi les triglycérides éthoxylés, les acides gras éthoxylés, les esters de sorbitan et les esters de sorbitan éthoxylés.

11. Emulsion selon la revendication 5, caractérisée en ce que l'émulsion aqueuse de matière active comporte au moins un tensio-actif non-ionique et/ou un tensio-actif anionique, le tensio-actif non-ionique étant choisi parmi :
– les di(phényl-1 éthyl) phénols alcoxylés,
– les tri(phényl-1 éthyl) phénols alcoxylés,
– les alkylphénols alcoxylés,
– les amines grasses alcoxylées,
– les alcools gras alcoxylés,
– les huiles de ricin alcoxylées,
– les polymères séquencés oxyde d'éthylène-oxyde de propylène (OE-OP) ou oxyde d'éthylène-oxyde de propylène-oxyde d'éthylène (OE-OP-OE).

12. Emulsion selon la revendication 11, caractérisée en ce que les motifs alcoxyles des tensio-actifs non-ioniques sont des motifs oxyéthylène et/ou oxypropylène, dont le nombre varie de 2 à 100 et de préférence de 4 à 50.

13. Emulsion selon l'une des revendications 11 ou 12, caractérisée en ce que les tensio-actifs non-ioniques sont choisis parmi :
– le di(phényl-1 éthyl)phénol éthoxylé avec 15 motifs oxyde d'éthylène (OE),
– le di(phényl-1 éthyl)phénol éthoxylé avec 5 motifs OE,
– le di(phényl-1 éthyl)phénol éthoxylé avec 10 motifs OE,
– le tri(phényl-1 éthyl)phénol éthoxylé avec 16 motifs OE,
– le tri(phényl-1 éthyl)phénol éthoxylé avec 20 motifs OE,
– le tri(phényl-1 éthyl)phénol éthoxylé avec 25 motifs OE,
– le tri(phényl-1 éthyl)phénol éthoxylé avec 40 motifs OE,
– les tri(phényl-1 éthyl)phénols éthoxy-propoxylés avec 25 motifs OE + OP,
– les nonylphénols éthoxy-propoxylés avec 25 motifs OE + OP,
– les nonylphénols éthoxy-propoxylés avec 30 motifs OE + OP,
– les nonylphénols éthoxy-propoxylés avec 40 motifs OE + OP,
– les nonylphénols éthoxy-propoxylés avec 55 motifs OE + OP,
– les nonylphénols éthoxy-propoxylés avec 80 motifs OE + OP,
– les polymères triséquencés OE-OP-OE.

14. Emulsion selon la revendication 5, caractérisée en ce que l'émulsion aqueuse de matière active comporte au moins un tensio-actif non-ionique et/ou un tensio-actif anionique, le tensio-actif non-ionique étant choisi parmi les sucroglycérides et au moins un triglycéride alcoxylé et/ou un acide gras alcoxylé et/ou un ester de sorbitan et/ou un ester de sorbitan alcoxylé et de préférence parmi les sucroglycérides et au moins un triglycéride éthoxylé et/ou un acide gras éthoxylé et/ou un ester de sorbitan et/ou un ester de sorbitan éthoxylé.

15. Emulsion selon la revendication 5, caractérisée en ce que l'émulsion aqueuse de matière active comporte au moins un tensio-actif non-ionique et/ou un tensio-actif anionique, le tensio-actif anionique étant choisi parmi :
– les esters phosphoriques des alkylphénols alcoxylés, des di(phényl-1 éthyl)phénols alcoxylés, des tri(phényl-1 éthyl)phénols alcoxylés, des alcools gras alcoxylés ;
– les esters sulfuriques des alkylphénols alcoxylés, des di(phényl-1 éthyl)phénols alcoxylés, des tri(phényl-1 éthyl)phénols alcoxylés, des alcools gras alcoxylés ;
– les esters sulfoniques des alkylphénols alcoxylés ;
– les sels de métaux alcalins ou alcalino-terreux des acides alkylbenzène-sulfoniques.

16. Emulsion selon la revendication 15, caractérisée en ce que les motifs alcoxyles des tensio-actifs anioniques sont des motifs oxyéthylène et/ou oxypropylène, dont le nombre varie de 2 à 100 et de préférence de 4 à 50.

17. Emulsion selon l'une des revendications 11, 15 ou 16, caractérisée en ce que les tensio-actifs anioniques sont choisis parmi :
    – les sels de triéthanolamine des mono- et diester phosphoriques du tri(phényl-1 éthyl)phénol éthoxylé avec 16 motifs OE,
    – les sels de potassium des mono- et diester phosphoriques du tri(phényl-1 éthyl)phénol éthoxylé avec 16 motifs OE,
    – le sulfate acide du di(phényl-1 éthyl)phénol éthoxylé avec 11 motifs OE,
    – le sel de potassium du monoester sulfurique du di(phényl-1 éthyl)phénol éthoxylé avec 15 motifs OE,
    – le sel de triéthanolamine du monoester sulfurique du di(phényl-1 éthyl)phénol éthoxylé avec 11 motifs OE,
    – le sel d'ammonium du monoester sulfurique du tri(phényl-1 éthyl)phénol éthoxylé avec 16 motifs OE,
    – le phosphate acide de nonylphénol éthoxylé avec 9 motifs OE,
    – le dodécylbenzène-sulfonate de sodium,
    – le dodécylbenzène-sulfonate de calcium,
    – le dodécylbenzène-sulfonate de triéthanolammonium,
    – le nonylbenzène-sulfonate de triéthanolammonium,
    – le nonylbenzène-sulfonate de diéthanolammonium,
    – le dodécylbenzène-sulfonate de N-méthylcyclohexylammonium.

18. Emulsion selon l'une des revendications 5 à 17, caractérisée en ce que l'émulsion aqueuse de matière active phytosanitaire comprend en poids par volume :
    – de 0,1 % à 70 % et de préférence de 0,5 % à 60 % de matière active phytosanitaire ou de solution de matière active phytosanitaire dans un solvant organique,
    – de 1 % à 20 % de tensio-actif non-ionique et/ou anionique et de préférence de 2 % à 15 %,
    – de 0 à 10 % d'agent mouillant,
    – de 0 à 5 % d'épaississant,
    – et le complément d'eau.

19. Emulsion selon l'une des revendications 1 à 18, caractérisée en ce qu'elle contient par rapport à son volume total :
    – de 0,1 à 60 % en poids de matière active,
    – de 0,1 à 40 % en poids de sucroglycérides,
    – de 0,1 à 15 % en poids de tensio-actif anionique et/ou non-ionique autre que les sucroglycérides,
    – de 0 à 30 % en poids de phospholipide,
    – de 0 à 15 % en poids de triglycéride alcoxylé et/ou d'acide gras alcoxylé et/ou d'ester de sorbitan et/ou d'ester de sorbitan alcoxylé,
    – de 0 à 5 % d'agent mouillant,
    – et de l'eau.

20. Utilisation des émulsions selon l'une des revendications 1 à 19, éventuellement après dilution par l'eau, pour le traitement et la protection des plantes.